# EUROPEAN PATENT APPLICATION

(11) **EP 0 707 273 A2**
(43) Date of publication of application: **17.04.1996**
(21) Application number: 95307204.8
(22) Date of filing: 11.10.1995
(51) Int. Cl.: G06F 17/60, B67D 5/08

(54) **Bulk product delivery system**

(30) Priority: 13.10.1994 GB 9420666
(71) Applicant: BP OIL INTERNATIONAL LIMITED, London EC2M 7BA (GB)
(72) Inventor: Douglas, Graham Hugh, BP OIL UK LIMITED, Hemel Hempstead, Hertfordshire HP2 4UL (GB)
(74) Representative: Hoey, Shona

(57) **Abstract**

A system for processing data relating to the loading and delivery of a liquid petroleum product from a vehicle comprising at least one storage compartment to at least one delivery site, the system comprising
(a) a first data storage and processing system;
(b) a second data storage and processing system, said second system being a hand held portable unit; and
(c) a means for allowing the first data storage and processing system to communicate with the second data storage and processing system to provide a two way transfer of data

characterised in that the hand held portable unit is provided with
(1) a compartment specific grade and stock control system
(2) a customer order, vehicle loading and delivery entry facility, said facility capable of receiving and processing delivery data to provide billing information, said facility operable during loading and delivery of the liquid petroleum product; and
(3) a visual display unit accommodating a signature capture facility, said signature capture facility capable of receiving and recording written indication and acceptance of delivery of the product.

## Description

The present invention relates to a loading and delivery system for bulk products and more specifically to a delivery system for recording and processing loading and delivery of liquid petroleum products.

Delivery of liquid products, such as petroleum is carried out by use of road tankers which can accommodate thousands of litres of liquid product. A typical delivery shift for one tanker can involve delivery to three or four different customers. Due to the hazardous and flammable nature of the product, great care must be taken in monitoring the loading and delivery process which starts with submission of the order and ends with processing the invoice. Typically, each stage is recorded and an intensive paper trail can be created by one tanker during a single shift. This of course is multiplied many times for a fleet of tankers leaving from a distribution centre.

Typically, processing and implementation of a single order involves receipt of the order, processing the order, loading the truck with the commodity or multiple commodities, delivering the commodity to the customer, transferring the commodity from the vehicle to the customer's storage area, confirming receipt of commodity, despatching the delivery note or invoice and storing details of delivery and payment. The process is traditionally paper driven with a separate sheet of paper usually produced during each stage. Transporting the papers, inputting and processing the data can take anything from a few days to several weeks.

This problem has been recognised in this art and attempts have been made to simplify and render the system more efficient. Such attempts have involved the use of a portable computer for recording the delivery data. In such circumstances, the portable computer accompanies the delivery person to the customer delivery sites. The computer may be pre-programmed with the amount to be delivered and the cost of the commodity. At the end of the delivery, the computer may be used to determine the final billing amount. This information is returned to the central office and an invoice sent therefrom. This particular system has the disadvantage that it is unable to record changes in vehicle grades and stocks, quantities delivered and changes such as spillage and other movements during transfer. Furthermore, this method still generates a paper trail. A particular method which attempts to overcome these deficiencies is that disclosed in European Patent 0035 888. This patent discloses a data network and accounting method for delivery of fluid commodities. The method of this patent attempts to monitor the delivery of the liquid product through the use of a portable memory capsule, billing tickets and a portable data station. The delivery capsule is connected to a delivery means associated with the delivery vehicle such that when the fluid leaves the vehicle and passed to the customer, the amount delivered is recorded by the capsule. Unpredicted administrative changes in the delivery procedure can be accommodated at the time of delivery. The capsule is then placed in the data station and the appropriate information stored therein.

Whilst it is acknowledged that the system of this EP-B-0035 888 succeeds in reducing the paper trail, the system cannot take into account product loading and all movements on and off the vehicle, such as spillage or loss of product during transfer between the vehicle and the storage container. The metering means monitors and records only the amount of fluid leaving the vehicle. Furthermore, this method relies on individual billing tickets which each generate a separate paper billing invoice. Thus, whilst the paper trail is reduced, it is not eliminated.

We have now developed a delivery system which can monitor all aspects of fluid loading, transfer and delivery and substantially eliminates the paper trail created during conventional deliveries thus reducing the overall data input and processing time. The system of the present invention is essentially a paperless operating system

Accordingly, the present invention provides a system for processing data relating to the loading and delivery of a liquid petroleum product from a vehicle comprising at least one storage compartment to at least one delivery site, the system comprising
(a) a first data storage and processing system;
(b) a second data storage and processing system; said second system being a hand held portable unit and
(c) a means for allowing the first data storage and processing system to communicate with the second data storage and processing system to provide a two way transfer of data
characterised in that the hand held portable unit is provided with
(1) a compartment specific grade and stock control system
(2) a customer order and delivery entry processing facility, said facility capable of receiving and processing delivery data to provide billing information, said facility operable during loading and delivery of the liquid petroleum product; and
(3) a visual display unit accommodating a signature capture facility, said signature capture facility capable of receiving and recording written indication and acceptance of delivery of the product.

According to a further aspect of the invention there is provided a method of effecting loading and monitoring and delivery of a liquid petroleum product from a vehicle comprising at least one compartment, which method comprises using the data system as defined above and
(a) connecting the first data storage and processing system to the second data storage and processing system for a period of time to effect transfer of first delivery data from the first data processing system to the second data processing system;
(b) disconnecting said data storage and processing systems;
(c) transferring the liquid petroleum product from at least one compartment of the delivery vehicle to a delivery site;
(d) recording second delivery data in the hand held portable unit during and/or immediately after completion of transfer of the liquid product from the delivery vehicle to delivery site;
(e) receiving written indication of delivery of the liquid petroleum product from recipient of the product through the signature caption means accommodated in the hand held portable unit;
(f) optionally supplying a paper delivery note and billing invoice processable from the hand held portable unit; and
(g) connecting the hand held portable unit to the first data storage and processing system to effect transfer of the delivery data from the hand held portable unit to the first data storage and processing system.
(h) automatically processing and confirming all the planned and actual loads and deliveries in the first processing system following transfer of the data from the second data processing system.
For the purposes of the present invention, first delivery data is defined as the data relating to aspects of the vehicle loading and delivery procedure such as quantity of product stored in the vehicle at the beginning of the delivery shift by compartment, quantity of product to be delivered to each customer during the shift, customers' name and address, cost per litre of product and second delivery data is defined as data generated as a result of the delivery and includes actual amount delivered to the customer, amount, if any lost as result of spillage, billing amount for each customer, quantily left on the vehicle in the event of non-sales transfers, spillage and the like.

The present invention provides the advantage that the conventional paper trail is reduced and almost eliminated. Furthermore, overall processing time at the end of the shift or day is substantially reduced with details of loading and delivery being processed either during or immediately after transfer of the product. Indeed the data system also allows for generation of a signed invoice whilst delivering the product. Furthermore, this invention provides the advantage that the first data processing is provided with enough controlled data from the second processing unit to initiate automatic confirmations associated with loadings and deliveries.

The invention relates to the processing of data during loading and delivery of liquid petroleum products. The present invention is a system comprising a first data storage and processing system and a second data storage and processing system capable of communicating with each other to effect two way transfer of delivery data and information

Suitably, on receipt of a request or order for the liquid petroleum product, the necessary data such as customer details, quantity required and due date for delivery is entered into the first data processing system. Suitably, the first data system is located at the distribution terminal or at the main administrative office. The first data storage and processing system may be a computer equipped with appropriate software capable of processing, confirming and storing the information. The computer may, if desired, be connected to a further computing system such as a mainframe.

The present invention requires the use of a second data storage and processing unit which is a hand held portable unit which is able to communicate with the first data storage and processing system. Suitably, the communicating means is a modem such as a hard wire or radio modem and a data cradle operable without plugs, sockets or any physical connection via infra red. The communicating means may be located in any suitable location. Suitably, the communicating means may be located at the site also accommodating the first data storage and processing system.

The hand held portable unit is suitably a portable computer accommodating appropriate software to provide a customer order, the means to accommodate the loading plan by grade and compartment for any tanker configuration and a delivery entry facility. The software is capable of recording delivery data including customer address, order details and all movement and storage details of the bulk product within the delivery vehicle. The portable data processing system may be equipped with an appropriate key pad for entering data during and/or on completion of the delivery. Suitably, the key pad may be a key board. Alternatively, the key pad may be a touch key facility. Preferably, the key pad is a touch key facility.

The hand held portable system is also provided with a visual display facility which accommodates a signature capture facility. The data entered into the portable system may be read from the display facility. Suitably, this is a screen. The display facility accommodates a signature capture facility such that on completion of delivery, the recipient may sign a delivery receipt notice which is displayed on the display facility of the portable unit. The signature is suitably written on the surface of the display facility using any suitable sharp edged implement. The signature is recorded on the display unit and stored in the portable unit. Optionally, the hand held unit may then be operably connected to a printer located in the delivery vehicle The signed delivery note and/or invoice may then be printed and handed to the customer thereby completing the delivery procedure.

The hand held portable system may optionally have the means to calculate customer tank content. This may be carried out by insertion of the customer dips. The data calculated from the portable system may then, if desired, be transmitted to the first processing system.

The hand held system may also be accommodated with the means to communicate to other processors on the vehicle by means of infra red communicator typically load sealing devices.

To operate the system of the present invention, the driver of the delivery vehicle suitably receives the hand held portable unit at the beginning of his delivery shift. The unit is connected to the first storage and processing system to receive the loading plan and delivery data for the daily delivery run. On receipt of the delivery and loading data from the first data storage and processing system, the hand held portable unit is removed from the modem or data cradle and carried by the driver during the day's delivery schedule typically stored between operations in a cradle device in the vehicle cab.

Details of the daily delivery orders are stored and obtained from the hand held unit. The delivery vehicle is loaded with the liquid petroleum product equating to the data stored in the hand held unit. Confirmation of the amount of product transferred and thereby stored in the vehicle may be entered into the hand held portable unit by the driver prior to leaving the depot, or these details may be uploaded automatically from a suitable wireless interface.

On arrival at the first delivery site, the liquid petroleum product is transferred to the customer as detailed and recorded in the portable unit. During and/or immediately after completion of delivery of the product, details relating to the delivery of the product, especially amount delivered, to the customer are entered into the hand held unit for storage. On completion of the transfer of the product and after confirmation of receipt is obtained from the customer, the delivery details are finalised and entered into the portable unit. At this stage the customer may wish to record views or comments about the quality of the delivery service. Such information may also be entered into the portable unit. This information will subsequently be passed to the main office or distribution site when the data is down loaded to the first storage and processing system. A delivery note detailing the delivery volume of product may be prepared using the hand held unit which can be viewed on the screen. Where the appropriate pricing details are available, the delivery note will contain such information and may form an invoice note. Subject to agreement with the customer as regards the content of the delivery/invoice note, the customer is invited to sign the note visible on the screen of the hand held portable system by means of a signature capture entry provided by the system. The signed invoice may, if desired, be printed by connecting the hand held portable unit to a suitable printer accommodated within the delivery vehicle and given to the customer. The customer may then proceed to pay for the product in the usual manner. Alternatively, the hand held portable unit may suitably accommodate a swipe system capable of receiving a credit card thus allowing for payment to be settled directly through a credit card company. The delivery and administrative system procedure is, thus, complete at the time of delivery with little to no generation of paper records..

At the end of the delivery or at the end of a day's shift which may comprise many different deliveries, the hand held portable system is suitably connected to the first data storage and processing system for down loading and storage of the delivery details. It will, of course, be apparent to the addressee that no further action is necessary if the invoice has been issued and payment settled by any appropriate means on completion of the delivery of the product at the delivery site. If, however, the invoice has not been issued and/or payment received, the invoice will be prepared and despatched on receipt of the delivery details from the hand held portable system. Addressee will also recall that all details of the order and load plans are known to the second processing device, in addition to the actual loaded volumes, any other movements, and delivery volumes. Thus, following down loading of this data to the first processing device, the traditional and manual processes data input and delivery confirmation are eliminated, and the information is processed automatically. The delivery details may then be stored in a suitable manner, preferably in electronic form. Where additional information such as customer comments or complaints has been entered, these will be processed on receipt from the hand held unit.

The invention will now be explained in greater detail with reference and by way of example to the following description and the accompanying drawings in which
Figure 1 is a schematic drawing of the data system of the present invention;
Figure 2 is a schematic drawing of the delivery procedure.

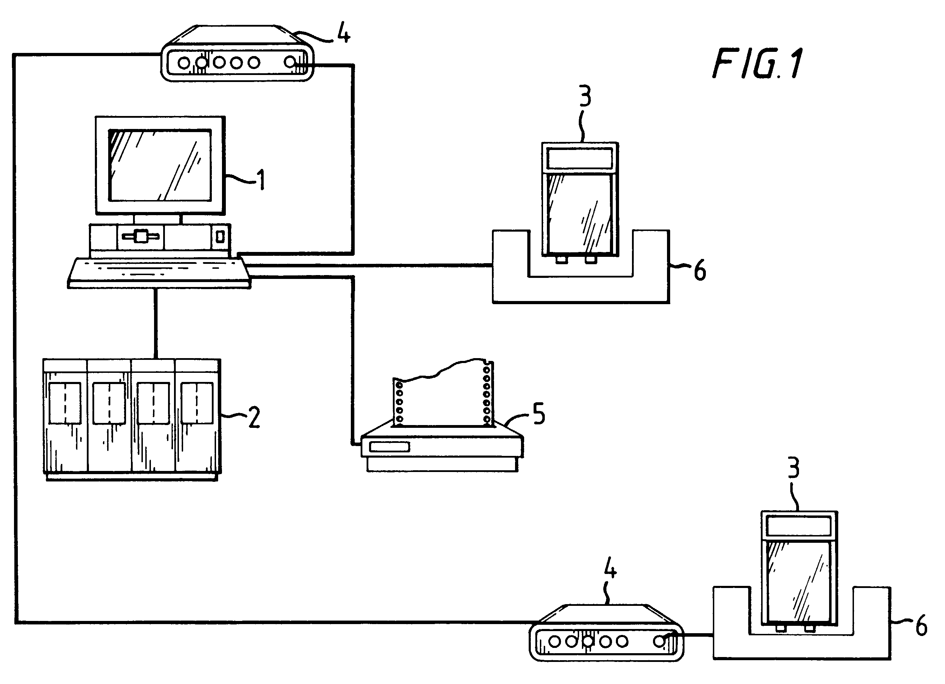

With reference to Figure 1, there is a system for processing data relating to the delivery of liquid petroleum products which comprises a portable computer (pc) (1) linked to a mainframe computer (2); the pc and the mainframe forming the first data storage and processing system. A hand held portable unit (3) known as Touch pc ® accommodating the appropriate computing software for use in this system, developed by ACS Data Limited, is connectable the pc (1) through a data cradle (6) via infra red or by a modem(s) (4). The pc (1) is linked to a printer (5).

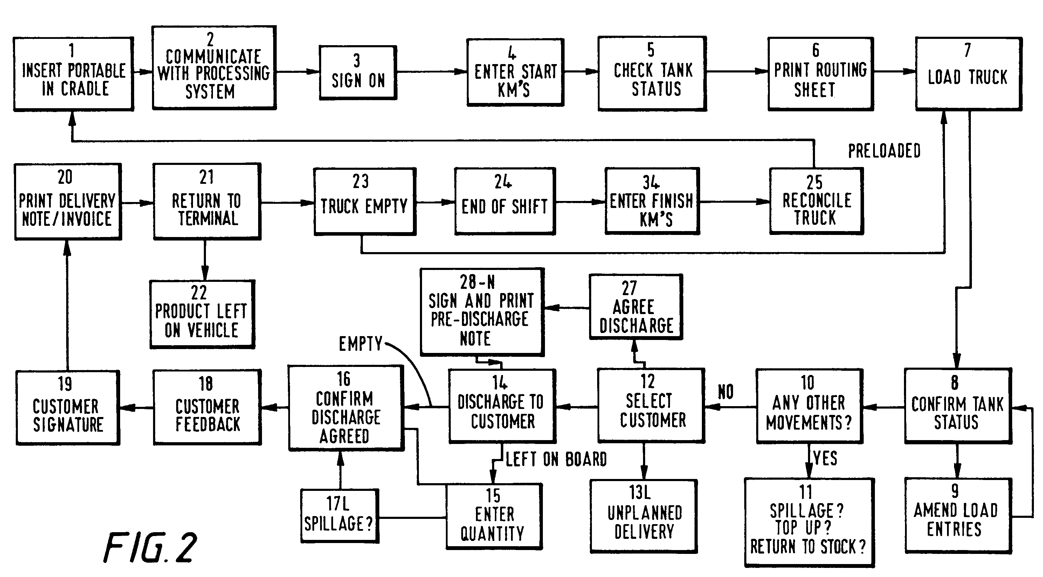

With reference to Figure 2, at the start of the day shift, the driver will insert the hand held portable unit (7) into the cradle (8) to communicate with the pc (9). Various administrative details (10, 11 and 12) are attended to prior to printing the delivery schedule (13). The delivery vehicle is loaded with the required amount of petroleum product (14). Details of the quantity contained in the vehicle are then entered into the hand held unit by the driver by compartment (15) in addition to any other relevant information (16,17,18). Details relating to (all vehicle product movements) and the first delivery are read from the hand held unit (19). The liquid petroleum product is delivered to the customer, transferred to the customers storage container and the delivery details finalised with the customer prior to entry into the hand held unit (20-26). A signed delivery note detailing the relevant delivery data is processed on the screen and signed by the customer. The signed note is stored in the unit and then printed by connecting the unit to a portable printer located in the cab of the delivery vehicle(27). The procedure may then be repeated several times at various customer delivery sites until the tanker is empty, or the shift is complete. The vehicle is returned to the depot (28-31). All stock details are held in graphic format on the hand held computer. Final administrative details are entered into the hand held system. The unit is then inserted into the cradle to download the delivery data to the main computer for storage, automatic load and delivery confirmations, and electronic archiving.

## Claims

1. A system for processing data relating to the loading and delivery of a liquid petroleum product from a vehicle comprising at least one storage compartment to at least one delivery site, the system comprising
(a) a first data storage and processing system;
(b) a second data storage and processing system, said second system being a hand held portable unit; and
(c) a means for allowing the first data storage and processing system to communicate with the second data storage and processing system to provide a two way transfer of data
characterised in that the hand held portable unit is provided with
(1) a compartment specific grade and stock control system
(2) a customer order, vehicle loading and delivery entry facility, said facility capable of receiving and processing delivery data to provide billing information, said facility operable during loading and delivery of the liquid petroleum product; and
(3) a visual display unit accommodating a signature capture facility, said signature capture facility capable of receiving and recording written indication and acceptance of delivery of the product.

2. A system as claimed in claim 1 wherein the central data storage and processing system is accommodated at an office location.

3. A system as claimed in claim 1 or claim 2 wherein the means for allowing the hand held portable data storage and processing system to communicate with the central data storage and processing system is a hard wire or radio modem.

4. A system as claimed in any one of claim 1 to 3 wherein the hand held portable storage and processing system is connectable to a printing means operable accommodated in the delivery vehicle.

5. A method of effecting loading and monitoring and delivery of a liquid petroleum product from a vehicle comprising at least one compartment which method comprises using a data system as claimed in any one of claims 1 to 4 and
(a) connecting the first storage and processing system to the second data storage and processing system for a period of time to effect transfer of first delivery data from the first data processing system to the second data processing system;
(b) disconnecting said data storage and processing systems;
(c) transferring the liquid petroleum product from at least one compartment of the delivery vehicle to a delivery site;
(d) recording second delivery data in the hand held portable unit during and/or immediately after completion of transfer of the liquid product from the delivery vehicle to delivery site;
(e) receiving written indication of delivery of the liquid petroleum product from recipient of the product through the signature capture means accommodated in the hand held portable unit;
(f) optionally supplying a paper delivery note and billing invoice processable from the hand held portable unit; and
(g) connecting the hand held portable unit to the first data storage and processing system to effect transfer of the delivery data from the hand held portable unit to the first data storage and processing system.
(h) automatically processing and confirming all the planned and actual loads and deliveries in the first processing system following transfer of the data from the second data processing system.
